# EUROPEAN PATENT APPLICATION

(11) **EP 1 892 564 A2**
(43) Date of publication of application: **27.02.2008**
(21) Application number: 07016258.1
(22) Date of filing: 20.08.2007
(51) Int. Cl.: G02F 1/13357, F21S 8/00, F21V 7/00

(54) **Backlight assembly and liquid crystal display apparatus having the same**

(30) Priority: 21.08.2006 KR 20060078694
(71) Applicant: Samsung Electronics Co., Ltd., Suwon-si 442-742 Gyeonggi-do (KR)
(72) Inventor: Kwon, Dal-Jung, Guro-gu Seoul (KR); Kang, Moon-Shik, Seongnam-shi Gyeonggi-do (KR); Kwon, Young-Sup, Dobung-gu Seoul (KR); Hwang, Eui-Dong, Namdong-gu Incheon (KR)
(74) Representative: Dr. Weitzel & Partner

(57) **Abstract**

A backlight assembly includes a plurality of lamps (200), a receiving container (300), and a reflective plate (400). The lamps are disposed substantially parallel with each other and generate light. The receiving container receives the lamps, and openings (312) corresponding to the lamps are formed therein. The reflective plate is disposed between the lamps and the receiving container and reflects the light from the lamps. The reflective plate is formed from an insulating material.

## Description

### BACKGROUND OF THE INVENTION

### 1. Field of the Invention

The present invention relates to a backlight assembly and a display apparatus having the backlight assembly. More particularly, the present invention relates to a backlight assembly capable of reducing leakage current of a lamp and a display apparatus having the backlight assembly.

### 2. Description of the Related Art

In general, a liquid crystal display "LCD" apparatus, which uses light in order to display an image, does not emit the light by itself. The LCD apparatus may include a backlight assembly that provides the liquid crystal display panel with light.

The backlight assembly for the LCD apparatus may use direct illumination or edge illumination with respect to the positioning of a light source in the assembly. In the edge illumination type, a lamp is disposed at sides of a light guide plate "LGP". The edge illumination type is used, e.g., in notebooks, monitors, etc. With the direct illumination type, lamps are disposed at a rear surface of the LCD apparatus substantially in parallel. The direct illumination type is typically used in large products, such as, e.g., a television receiver set.

In particular, a backlight assembly employing direct illumination includes a plurality of lamps disposed substantially in parallel with each other on a bottom part of a bottom chassis, which is formed of a metallic material. However, this type of illumination is known to incur current leakage between the lamps and the bottom chassis, which can further cause reduced brightness and increased power consumption. Moreover, with direct illumination, lamps disposed at the edges of the rear surface of the assembly tend to incur a greater amount of current leakage than those disposed at central areas. In addition, blind spots and a deterioration of brightness uniformity are also attributed to assemblies utilizing direct illumination.

### BRIEF SUMMARY OF THE INVENTION

Exemplary embodiments of the present invention provide a backlight assembly capable of reducing the amount of current leaked from a lamp to increase brightness uniformity and reduce power consumption.

Exemplary embodiments of the present invention also provide a display apparatus having the backlight assembly.

In example embodiments of the present invention, a backlight assembly includes a plurality of lamps, a receiving container, and a reflective plate. The lamps are disposed substantially parallel with each other, and generate light. The receiving container receives the lamps, and openings corresponding to the lamps are formed at the receiving container. The reflective plate is disposed between the lamps and the receiving container, and reflects the light from the lamps. The reflective plate is formed from an insulating material.

In one example, the reflective plate may include a reflective plate protrusion part inserted into each of the openings of the receiving container. In another example, the backlight assembly may further include a mold piece inserted into each of the openings of the receiving container and is formed from an insulating material. In another example, the backlight assembly may further include a mold plate combined to a rear surface of the receiving container and a combining protrusion part inserted into each of the openings. The mold plate may be formed from an insulating material.

In one embodiment, the receiving container includes a bottom part disposed under the lamps and the openings, whereby the bottom part is formed from a metallic material, and a first side part, a second side part, a third side part, and a fourth side part, each of which are extended from corresponding four edges of the bottom part to form a receiving space. The first side part, second side part, third side part, and fourth side part may be formed from a metallic material.

In another embodiment, the receiving container may include a bottom part disposed under the lamps and the openings, whereby the bottom part is formed from a metallic material, and a first side mold and a second side mold combined to perpendicular edges of the lamps in a longitudinal direction of the lamps to cover electrode parts of the lamps. The first and second side molds may be formed from an insulating material. Each of the first side mold and the second side mold includes a sliding groove for receiving corresponding perpendicular edges of the bottom part.

In another embodiment, the receiving container may include a bottom part disposed under the lamps and the openings, whereby the bottom part is formed from a metallic material, and a first side part and a second side part formed at parallel edges of the bottom part in a longitudinal direction of the lamps to form a receiving space. The first side part and the second side part may be formed from an insulating material.

In another example embodiment of the present invention, a backlight assembly includes a plurality of lamps extending parallel to each other and generating light, a receiving container and a reflective plate disposed between the lamps and the receiving container and reflecting the light from the lamps. The receiving container includes a bottom part disposed under the lamps and is formed from a metallic material, a first side part and a second side part formed at parallel edges of the bottom part in a longitudinal direction of the lamps to form a receiving space, and a first side mold and a second side mold combined to perpendicular edges of the lamps in a longitudinal direction of the lamps to cover electrode parts of the lamps.

In another example embodiment of the present invention, a backlight assembly includes a plurality of lamps extending parallel to each other and generating light, a receiving container and a reflective plate disposed between the lamps and the receiving container and reflecting the light from the lamps. The receiving container includes a bottom part disposed under the lamps and is formed from a metallic material, and a first side part and a second side part formed at parallel edges of the bottom part in a longitudinal direction of the lamps to form a receiving space. The first side part and the second side part include grooves, and the first side part and the second part are combined to the parallel edges of the bottom part at the grooves.

For example, the first side part and the second side part may include an insulation material.

Exemplary embodiments of the present invention also include a display apparatus including a backlight assembly and a display panel displaying an image using the light provided from the backlight assembly. The backlight assembly includes a plurality of lamps, a receiving container receiving the lamps and having openings formed therein corresponding to the lamps, and a reflective plate disposed between the lamps and the receiving container. The reflective plate may be formed from an insulating material.

According to the backlight assembly and the display apparatus having the backlight assembly, the amount of current leaked from the lamps is reduced, so that brightness is increased, power consumption is decreased, and brightness uniformity is improved.

### BRIEF DESCRIPTION OF THE DRAWINGS

The above and other aspects, features, and advantages of the present invention will become readily apparent by reference to the following detailed description when considered in conjunction with the accompanying drawings wherein:
FIG. 1 is an exploded perspective view illustrating a backlight assembly in accordance with an exemplary embodiment of the present invention;
FIG. 2 is a cross-sectional view illustrating the backlight assembly shown in FIG. 1;
FIG. 3 is a perspective view illustrating a receiving container in accordance with an embodiment of the present invention;
FIG. 4 is a cross-sectional view illustrating a positional relationship between the receiving container and the lamp shown in FIG. 3;
FIG. 5 is a cross-sectional view illustrating a reflective plate in accordance with another embodiment of the present invention;
FIG. 6 is a cross-sectional view illustrating a backlight assembly in accordance with another embodiment of the present invention;
FIG. 7 is a cross-sectional view illustrating a backlight assembly in accordance with another embodiment of the present invention;
FIG. 8 is an exploded perspective view illustrating a receiving container in accordance with another embodiment of the present invention;
FIG. 9 is a cross-sectional view illustrating the receiving container shown in FIG. 8;
FIG. 10 is a cross-sectional view illustrating the receiving container in accordance with another embodiment of the present invention; and
FIG. 11 is an exploded perspective view illustrating a display apparatus in accordance with an exemplary embodiment of the present invention.

### DETAILED DESCRIPTION OF THE INVENTION

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. In the drawings, the size and relative sizes of layers and regions may be exaggerated for clarity.

It will be understood that when an element or layer is referred to as being "on", "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numbers refer to like elements throughout. As used herein, the term "and/or" includes any and all combinations of one or more of the associated listed items.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the present invention.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Exemplary embodiments of the present invention are described herein with reference to cross-section illustrations that are schematic illustrations of idealized embodiments (and intermediate structures) of the present invention. As such, variations from the shapes of the illustrations as a result, for example, of manufacturing techniques and/or tolerances, are to be expected. Thus, embodiments of the present invention should not be construed as limited to the particular shapes of regions illustrated herein but are to include deviations in shapes that result, for example, from manufacturing. For example, an implanted region illustrated as a rectangle will, typically, have rounded or curved features and/or a gradient of implant concentration at its edges rather than a binary change from implanted to non-implanted region. Likewise, a buried region formed by implantation may result in some implantation in the region between the buried region and the surface through which the implantation takes place. Thus, the regions illustrated in the figures are schematic in nature and their shapes are not intended to illustrate the actual shape of a region of a device and are not intended to limit the scope of the invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the present invention will be explained in detail with reference to the accompanying drawings.

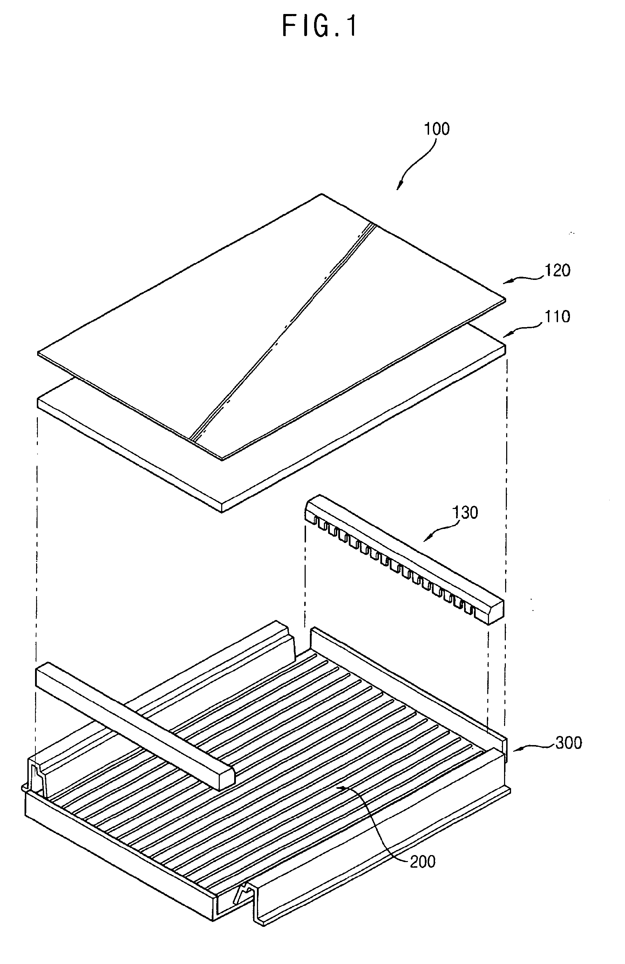

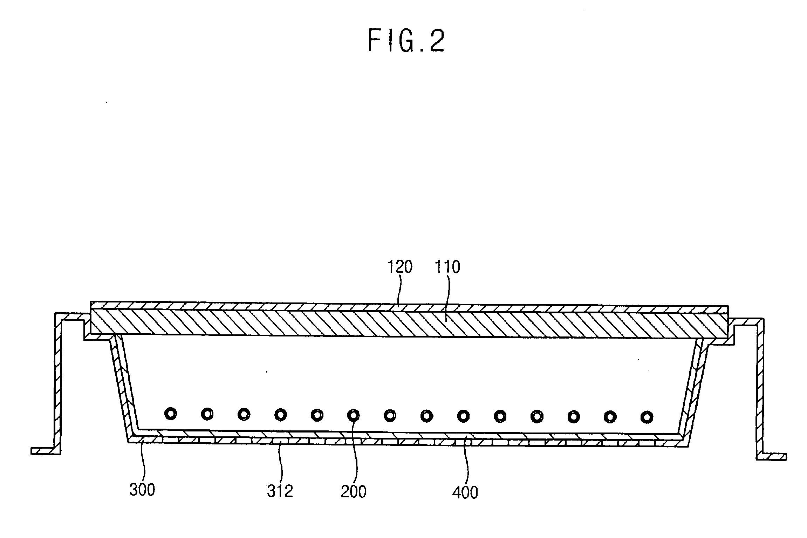

FIG. 1 is an exploded perspective view illustrating a backlight assembly in accordance with an exemplary embodiment of the present invention. FIG. 2 is a cross-sectional view illustrating the backlight assembly shown in FIG. 1.

Referring to FIGS. 1 and 2, a backlight assembly 100 in accordance with an exemplary embodiment of the present invention includes a plurality of lamps 200, a receiving container 300 and a reflective plate 400.

The lamps 200 are disposed on a bottom part of the receiving container 300 and extend substantially parallel with each other. The lamps 200 generate light in response to a driving power provided from an external inverter (not shown).

In one embodiment, each of the lamps 200 may include a cold cathode fluorescent lamp "CCFL" formed as a thin and long cylindrical shape. In another embodiment, the lamps 200 may be formed in a 'U' shape. Moreover, the lamps 200 may include an external electrode fluorescent lamp "EEFL" having electrodes at outside surfaces of end portions thereof. The lamps 200 may be disposed at constant intervals at the bottom part of the receiving container 300 to provide uniform brightness of the backlight assembly 100.

The lamps 200 may be fixed at an inside of the receiving container 300, e.g., by lamp holders disposed at inside end portions of the receiving container 300.

In an exemplary embodiment, the receiving container 300 receives the lamps 200 and the reflective plate 400 and is formed from a metallic material having strong mechanical strength that is resistant to deformation. As the receiving container 300 includes a metallic material, a capacitor is formed between the lamps 200, and an amount of current may be leaked between the lamps 200. In an exemplary embodiment, openings 312 are formed in the bottom part of the receiving container 300 at locations corresponding to the lamps 200 to reduce the leakage of current from the lamps 200. The openings may be formed by removing adjacent portions of the bottom part (i.e., metallic materials) that correspond to the lamps 200 and the positioning thereof with respect to the receiving container 300.

ln an exemplary embodiment, the reflective plate 400 is disposed between the lamps 200 and the receiving container 300, and reflects light generated by the lamps 200. The reflective plate 400 may be attached and fixed to the receiving container 300, e.g., by an adhesive member such as double sided adhesive tape. The reflective plate 400 covers the openings 312 of the receiving container 300 to prevent impurities from flowing toward the inside of the receiving container 300 from the outside.

The reflective plate 400 includes an insulating material to reduce the leakage of current from the lamps 200. The reflective plate 400, for example, may include white polyethylene terephthalate (PET) or polycarbonate (PC) material.

In an exemplary embodiment, the backlight assembly 100 may further include a diffusion plate 110 and at least one optical sheet 120 disposed on the diffusion plate 110. The diffusion plate 110 may be mounted on the receiving container 300 and thereafter disposed on the lamps 200.

The diffusion plate 110 diffuses the light generated by the lamps 200 and the light reflected by the reflective plate 400 to improve brightness uniformity. In one embodiment, the diffusion plate 110 is formed in a plate shape and with a thickness that is greater than a thickness of the optical sheet 120, such that the diffusion plate 110 may support the optical sheet 120 disposed thereon. The diffusion plate 110 may include a transparent material for light transmission, and a diffusive material for light diffusion. The diffusion plate 110, for example, may include polymethyl methacrylate (PMMA).

The optical sheet 120 may include a diffusion sheet. The diffusion sheet diffuses the diffused light from the diffusion plate 110 to improve brightness uniformity. The optical sheet 120 may also include a prism sheet. The prism sheet condenses light diffused by the diffusion plate 110 or the diffusion sheet in a vertical direction to improve brightness uniformity. The optical sheet 120 may further include a reflective polarizing plate. The reflective polarizing plate transmits a portion of light satisfying a condition, and reflects a remaining portion of the light not satisfying the condition, so that light is recycled, thereby increasing brightness.

In another embodiment, the backlight assembly 100 may further include a side mold 130 disposed at end portions of the lamps 200. The side mold 130 is disposed in the receiving container 300, and covers the end portions of the lamps 200. The side mold 130 covers electrode parts of the lamps 200 to reduce blind spots and to support the diffusion plate 110.

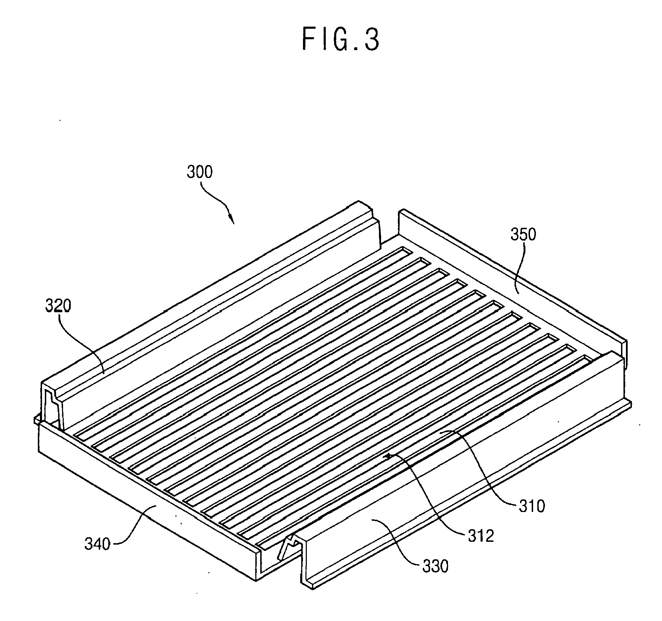

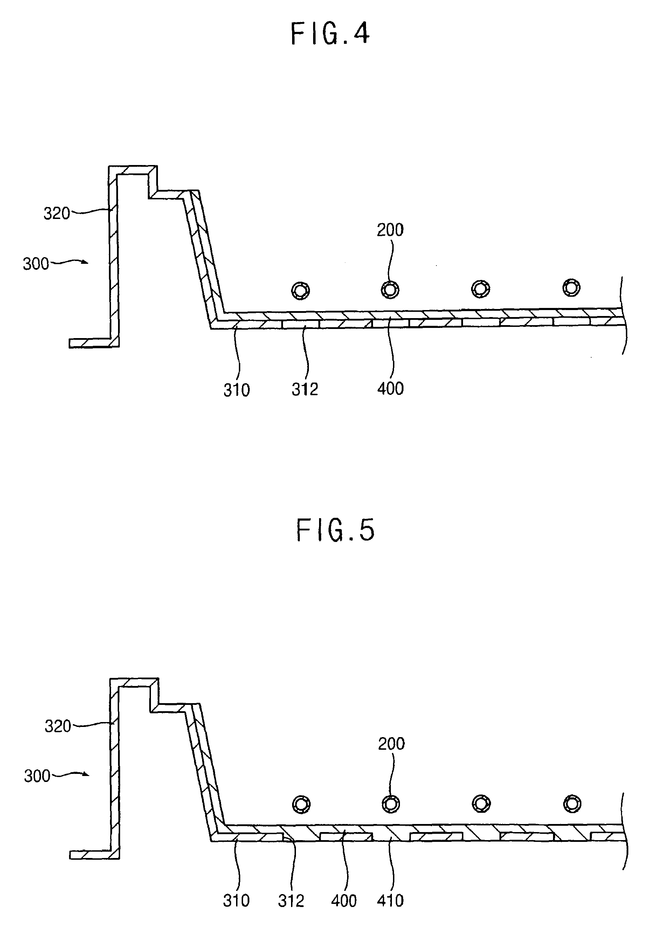

FIG. 3 is a perspective view illustrating a receiving container in accordance with an embodiment of the present invention. FIG. 4 is a cross-sectional view illustrating a positional relationship between the receiving container and the lamp illustrated in FIG. 3.

Referring to FIGS. 3 and 4, a receiving container 300 includes a bottom part 310 disposed under the lamps 200 and side parts 320, 330, 340 and 350. The side parts 320, 330, 340 and 350 are extended from corresponding edges of the bottom part 310 to form a receiving space.

In one embodiment, the bottom part 310 may be formed from a metallic material, and has openings 312 formed therein for reducing an amount of current leaked at positions corresponding to the lamps 200. Each of the openings 312 may be formed with a slightly greater width than a diameter of the lamps 200. The openings 312 are formed along a longitudinal direction of the lamps 200. The reflective plate 400 is disposed on the bottom part 310 of the receiving container 300. The openings 312 are covered by the reflective plate 400 to prevent impurities from flowing into the receiving space.

The side parts 320, 330, 340 and 350 correspond to first, second, third and fourth parts, respectively, and each of which parts extends from respective edges of the bottom part 310. Each of side parts 320, 330, 340, and 350 may be formed from a metallic material similar to that of the bottom part 310. ln one embodiment, the side parts 320, 330, 340 and 350 are integrally formed with the bottom part 310. The first and second side parts 320 and 330, respectively, are formed at parallel edges of the bottom part 310 in the longitudinal direction of the lamps 200. The third and fourth side parts 340 and 350, respectively, are formed at parallel edges of the bottom part 310 and are substantially perpendicular to the longitudinal direction of the lamps 200. A stepped portion supporting and fixing the diffusion plate 110 may be formed at the first and second side parts 320 and 330, respectively.

FIG. 5 is a cross-sectional view illustrating a reflective plate in accordance with another embodiment of the present invention.

Referring to FIG. 5, a reflective plate 400 may include a reflective plate protrusion part 410 inserted into the openings 312 of the receiving container 300. When the thickness of the reflective plate 400 is substantially the same as the thickness as the bottom plate 310 of the receiving container 300, light may leak through the openings 312. The reflective plate protrusion parts 410 are formed in an area corresponding to the openings 312 thereby increasing a thickness of the reflective plate 400 corresponding to the size and location of the openings 312. Thus configured, the amount of current leaked from the lamps 200 is reduced, and the leakage of the light at the openings 312 may be prevented.

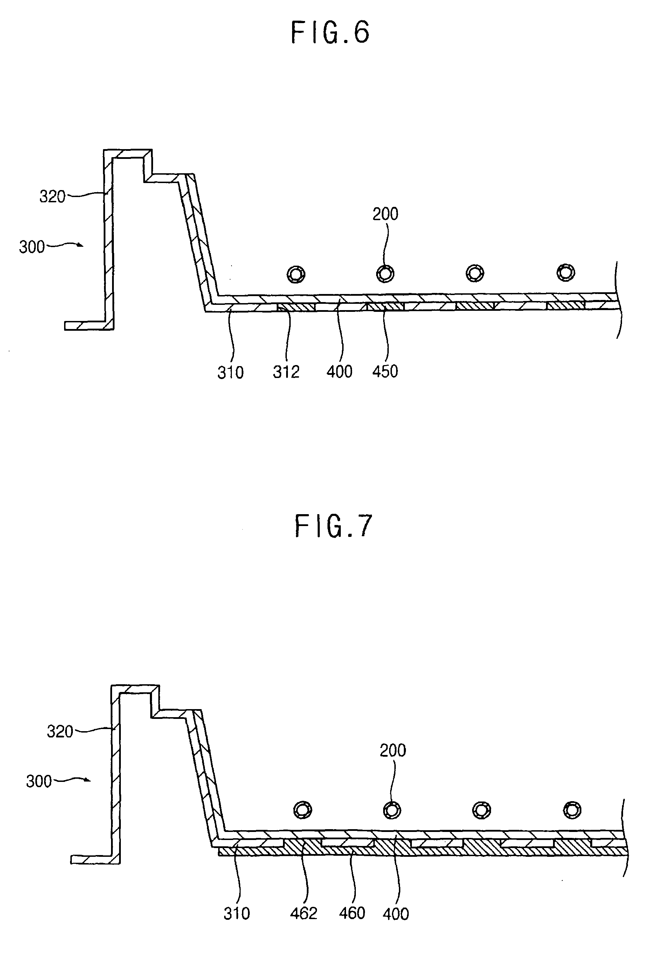

FIG. 6 is a cross-sectional view illustrating a backlight assembly in accordance with another embodiment of the present invention.

Referring to FIG. 6, the backlight assembly 100 may further include mold pieces 450. The mold pieces 450 include an insulating material, and are inserted into the openings 312 of the receiving container 300. The mold pieces 450 are formed as substantially the same shape as the openings 312. The insulating material of the mold pieces 450 reduces the amount of current leaked from the lamps 200. The mold pieces 450 cover the openings 312, such that the inflow of impurities and light leakage may be prevented.

FIG. 7 is a cross-sectional view illustrating a backlight assembly in accordance with another embodiment of the present invention.

Referring to FIG. 7, the backlight assembly 100 may further include a mold plate 460. The mold plate 460 includes an insulating material, and is disposed on a rear surface of the receiving container 300. The mold plate 460 has a combining area corresponding to the bottom part 310 of the receiving container 300, and combining protrusion parts 462 may be formed at the combining area of the mold plate 460 corresponding to the openings 312. The combining protrusion parts 462 are inserted into corresponding openings 312. The mold plate 460 may be disposed on the bottom part 310 of the receiving container 300, using, e.g., a screw, adhesive tape, etc. The insulating material of the mold plate 460 reduces the amount of current leaked from the lamps 200. The mold plate 460 covers the openings 312, thereby preventing inflow of impurities and light leakage.

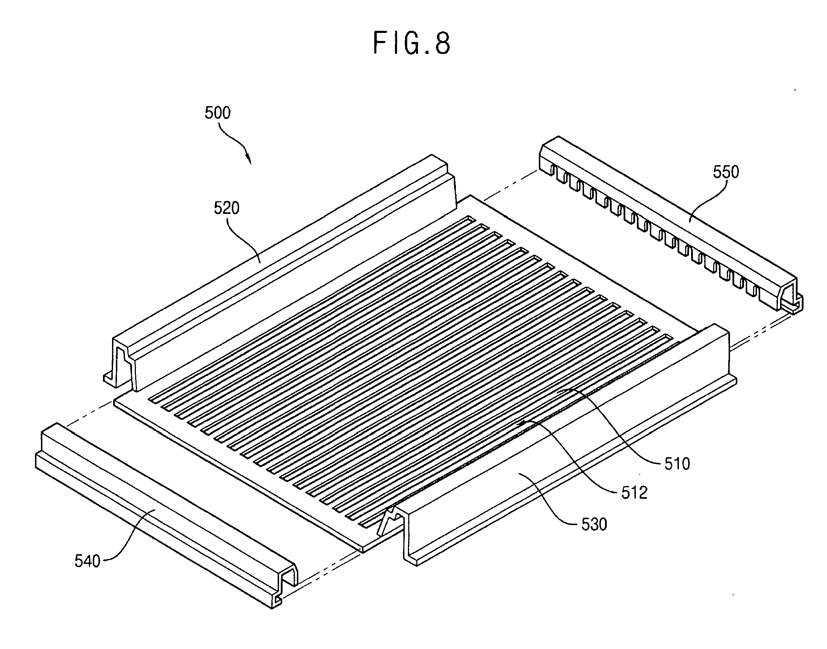

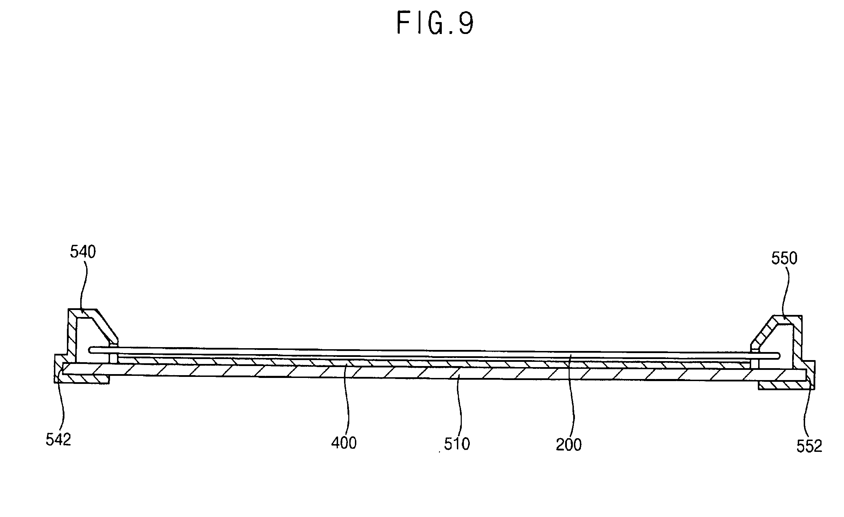

FIG. 8 is an exploded perspective view illustrating a receiving container in accordance with another embodiment of the present invention. FIG. 9 is a cross-sectional view illustrating the receiving container shown in FIG. 8.

Referring to FIGS. 8 and 9, a receiving container 500 includes a bottom part 510 disposed under the lamps 200 and first and second side parts 520 and 530, respectively. The first and second side parts 520 and 530 are extended from edges of the bottom part 510 and substantially parallel with a longitudinal direction of the lamps 200. The bottom part 510 and the first and second side parts 520 and 530 may be formed from a metallic material. Openings 512 may be formed in an area of the bottom part 510 corresponding to the lamps 200 to reduce leakage current.

Moreover, edges of the bottom part 510, which are substantially perpendicular to a longitudinal direction of the lamps 200, have opened structures. Stated another way, the edges of the bottom part 510 are open-ended.

The bottom part 510 and first and second side parts 520 and 530, which extend from edges of the bottom plate 510, form a receiving space. The receiving container 500 may further include first and second side molds 540 and 550, respectively. The first and second side molds 540 and 550 may be formed from an insulating material, and cover electrode parts of the lamps 200.

The first and second side molds 540 and 550 slide toward the perpendicular edges of the bottom part 510 in the longitudinal direction of the lamps 200 to be combined to the bottom part 510. The first and second side molds 540 and 550 include sliding grooves 542 and 552 to receive corresponding edges of the bottom part 510.

Metallic side parts of the receiving container 500 at the edges where electrode parts of the lamps 200 are disposed are removed, and the first and second side molds 540 and 550 having the insulating material are combined with the bottom part 510, so that a receiving space is formed thereby reducing the amount of leaked current generated at the electrode parts of the lamps 200.

The diffusion plate 110 (illustrated in FIG. 1) disposed on the lamps 200 is supported and fixed by the first and second side parts 520 and 530 (e.g., at the stepped portion thereof) and the first and second side molds 540 and 550.

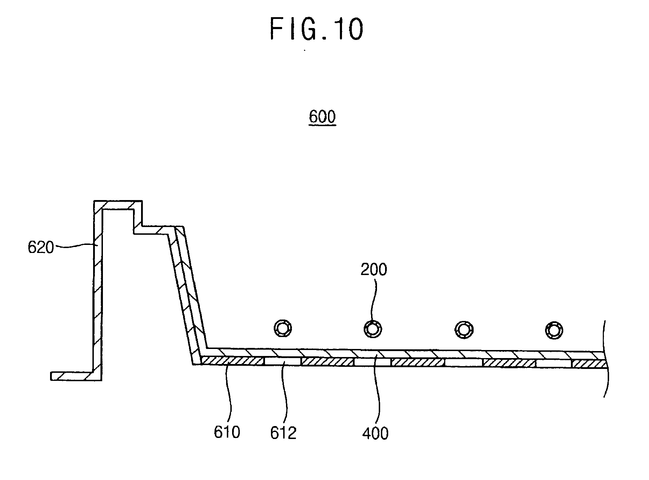

FIG. 10 is a cross-sectional view illustrating the receiving container in accordance with another embodiment of the present invention.

Referring to FIG. 10, a receiving container 600 in accordance with another embodiment of the present invention includes a bottom part 610 disposed under the lamps 200, a first side part 620 and a second side part (not shown). The first side part 620 and the second side part (not shown) are formed at parallel edges of the bottom part 610 in a longitudinal direction of the lamps 200 to form a receiving space.

The bottom part 610 may be formed from a metallic material, and openings 612 may be formed at an area of the bottom part 610 corresponding to the lamps 200 to reduce the amount of current leaked from the lamps 200.

The first side part 620 and the second side part (not shown) include an insulating material to reduce the amount of current leaked from the adjacent lamps 200. By reducing the amount of leaked current from the edge lamps 200 adjacent to the first and second side parts, brightness uniformity between the lamps 200 in edge areas, as well as from the lamps 200 in the central areas is improved. Moreover, a distance between the first side part 620 and the adjacent lamp and a distance between the second side part (not shown) and the adjacent lamp may be reduced, thereby increasing a design margin of the backlight assembly 100.

Perpendicular edges of the bottom part 610 in the longitudinal direction of the lamps 200 may be formed as a side part having a metallic material as illustrated in FIG. 3, or may be combined to a side mold having an insulating material as illustrated in FIG. 8.

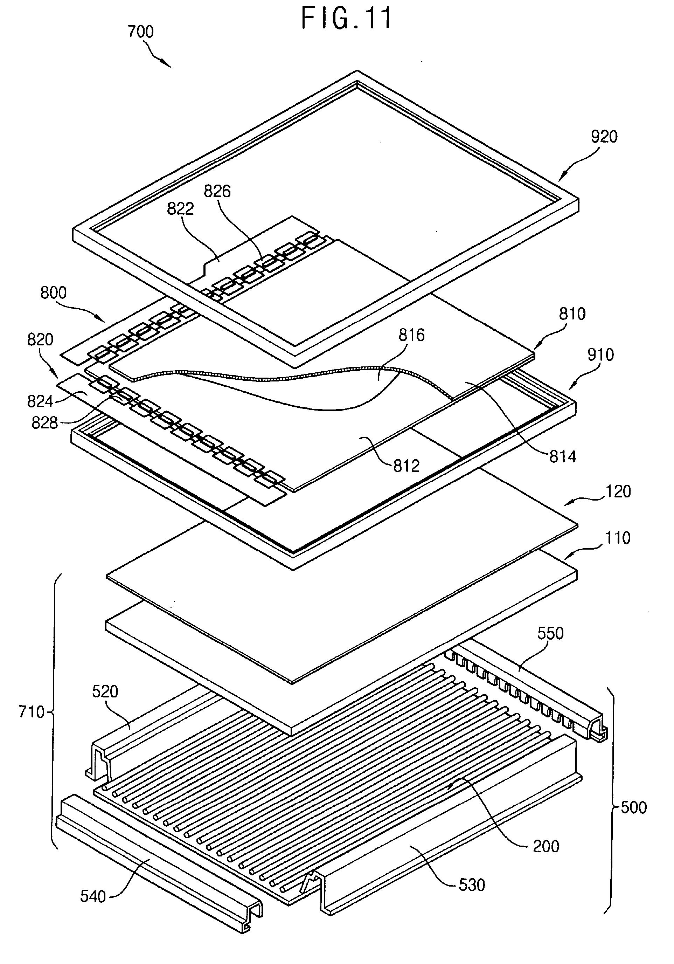

FIG. 11 is an exploded perspective view illustrating a display apparatus in accordance with an exemplary embodiment of the present invention.

Referring to FIG. 11, a display apparatus 700 includes a backlight assembly 710 supplying light and a display unit 800 displaying an image.

The backlight assembly 710 may include substantially the same composition as the backlight assembly illustrated in FIGS. 1 to 10. Thus, the repetitive detailed explanation will be omitted.

The display unit 800 includes a display panel 810 and a driving circuit part 820. The display panel 810 displays an image using light provided from the backlight assembly 710. The driving circuit part 820 drives the display panel 810.

The display panel 810 includes a first substrate 812, a second substrate 814 facing and combined with the first substrate 812, and a liquid crystal layer 816 disposed between the first substrate 812 and the second substrate 814.

The first substrate 812, for example, may include a thin film transistor "TFT" substrate having a plurality of thin film transistors "TFT" formed as a switching device in a matrix shape. A data line and a gate ling are electrically connected to a source electrode and a gate electrode of the TFT, respectively, and a pixel electrode having a transparent conductive material is electrically connected to a drain electrode of the TFT.

The second substrate 814, for example, may include a color filter substrate having RGB color filters for displaying colors formed as a thin film shape. A common electrode having a transparent conductive material is formed in the second substrate 814. The color filters may be formed in the first substrate 812.

The driving circuit part 820 includes a data printed circuit board 822, a gate print circuit board 824, a data driving circuit film 826 and a gate driving circuit film 828. The data print circuit board 822 applies a data driving signal to the display panel 810. The gate print circuit board 824 applies a gate driving signal to the display panel 810. The data driving circuit film 826 electrically connects the data printed circuit board 822 to the display panel 810. The gate driving circuit film 828 electrically connects the gate printed circuit board 824 to the display panel 810.

Each of the data driving circuit film 826 and the gate driving circuit film 828 includes a tape carrier package "TCP" or a chip on film "COF". Each of a data driving chip and a gate driving chip is mounted on the TCP or the COF. The gate printed circuit board 824 may be removed by forming an extra signal wiring at the display panel 810 and the gate driving circuit film 828.

The display apparatus 700 may further include a middle mold 910 disposed between an optical sheet 120 and the display panel 810. The middle mold 910 is combined to the receiving container 500 to fix the optical sheet 120 and a diffusion plate 110 to the receiving container 500 and to support the display panel 810. The middle mold 910 may be integrally formed as a frame shape. The middle mold 910 may include a combining structure combined by two or four pieces.

The display apparatus 700 may further include a top chassis 920 for fixing the display panel 810. The top chassis 920 surrounds edges of the display panel 810, and is combined with the receiving container 500 to fix the display panel 810 on the middle mold 910. The top chassis 920 prevents the display panel 810 from damage by external impact, and prevents the display panel 810 from being separated from the middle mold 910.

According to the backlight assembly and the display apparatus having the backlight assembly, the openings are formed at the receiving container receiving the lamps, so that the amount of current leaked from the lamps is reduced and brightness is increased. Thus, power consumption is decreased.

Moreover, the side parts having the metallic material at the electrode parts of the lamps are removed, and the side mold having the insulating material is disposed instead of the side parts, so that the current leaked from the lamps is further reduced.

Moreover, the side part of the receiving container at parallel edges in the longitudinal direction of the lamps is formed from the insulating material, so that the amount of current leaked from the lamps at the edges is reduced and brightness uniformity is improved.

Although the exemplary embodiments of the present invention have been described, it is understood that the present invention should not be limited to these exemplary embodiments but various changes and modifications can be made by one of ordinary skill in the art within the spirit and scope of the present invention as hereinafter claimed.

## Claims

1. A backlight assembly comprising:
a plurality of lamps extending substantially parallel with each other and generating light;
a receiving container receiving the lamps and having openings formed therein, the openings corresponding to the lamps; and
a reflective plate disposed between the lamps and the receiving container and reflecting the light from the lamps, the reflective plate formed from an insulating material.

2. The backlight assembly of claim 1, wherein the reflective plate includes a reflective plate protrusion part inserted into each of the openings of the receiving container.

3. The backlight assembly of claim 1, further comprising a mold piece inserted into each of the openings of the receiving container, wherein the mold piece is formed from an insulating material.

4. The backlight assembly of claim 1, further comprising a mold plate disposed on a rear surface of the receiving container and having a combining protrusion part inserted into each of the openings, wherein the mold plate is formed from an insulating material.

5. The backlight assembly of claim 1, wherein the receiving container comprises:
a bottom part disposed under the lamps and having the openings, the bottom part formed from a metallic material; and
a first side part, a second side part, a third side part and a fourth side part extending from each of four edges of the bottom part to form a receiving space, the first, second, third and fourth side parts formed from a metallic material.

6. The backlight assembly of claim 1, wherein the receiving container comprises:
a bottom part disposed under the lamps and having the openings, the bottom part formed from a metallic material; and
a first side mold and a second side mold combined to perpendicular edges of the lamps in a longitudinal direction of the lamps to cover electrode parts of the lamps, the first side mold and second side mold formed from an insulating material.

7. The backlight assembly of claim 6, wherein each of the first side mold and the second side mold comprises a sliding groove for receiving corresponding perpendicular edges of the bottom part.

8. The backlight assembly of claim 1, wherein the receiving container comprises:
a bottom part disposed under the lamps and having the openings, the bottom part formed from a metallic material; and
a first side part and a second side part formed at parallel edges of the bottom part in a longitudinal direction of the lamps to form a receiving space, the first and second side parts formed from an insulating material.

9. The backlight assembly of claim 1, further comprising:
a diffusion plate disposed on the lamps; and
at least one optical sheet disposed on the diffusion plate.

10. A backlight assembly comprising:
a plurality of lamps extending parallel to each other and generating light;
a receiving container including a bottom part disposed under the lamps and formed from a metallic material, a first side part and a second side part formed at parallel edges of the bottom part in a longitudinal direction of the lamps to form a receiving space, and a first side mold and a second side mold combined to perpendicular edges of the lamps in a longitudinal direction of the lamps to cover electrode parts of the lamps; and
a reflective plate disposed between the lamps and the receiving container and reflecting the light from the lamps, and
wherein each of the first side mold and the second side mold includes a sliding groove for receiving corresponding perpendicular edges of the bottom part.

11. The backlight assembly of claim 10, wherein each of the first side part and the second side part is formed from an insulating material.

12. The backlight assembly of claim 10, wherein the bottom part of the receiving container has a plurality of openings formed at an area of the bottom part corresponding to the lamps.

13. A backlight assembly comprising:
a plurality of lamps extending substantially parallel with each other and generating light;
a receiving container including a bottom part disposed under the lamps and formed from a metallic material, and a first side part and a second side part formed at parallel edges of the bottom part in a longitudinal direction of the lamps to form a receiving space; and
a reflective plate disposed between the lamps and the receiving container and reflecting the light from the lamps, and
wherein the first side part and the second side part include grooves, and the first side part and the second part are combined to the parallel edges of the bottom part at the grooves.

14. The backlight assembly of claim 13, wherein the first side part and the second side part comprise an insulation material.

15. A display apparatus comprising:
a backlight assembly including a plurality of lamps, a receiving container receiving the lamps and having openings formed therein corresponding to the lamps, and a reflective plate disposed between the lamps and the receiving container and formed from an insulating material; and
a display panel displaying an image using the light provided from the backlight assembly.

16. The display apparatus of claim 15, further comprising a mold inserted into the openings and formed from an insulating material.

17. The display apparatus of claim 15, wherein the reflective plate includes a reflective protrusion part inserted into each of the openings.

18. The display apparatus of claim 15, wherein the receiving container comprises:
a bottom part disposed under the lamps and having the openings, the bottom part formed from a metallic material; and
a first side mold and a second side mold combined with perpendicular edges of the lamps in a longitudinal direction of the lamps to cover electrode parts of the lamps, each of the first and second side molds formed from an insulating material.

19. The display apparatus of claim 15, wherein the receiving container comprises:
a bottom part disposed under the lamps and having the openings, the bottom part formed from a metallic material; and
a first side part and a second side part formed at parallel edges of the bottom part in a longitudinal direction of the lamps to form a receiving space, each of the first and second side parts formed from an insulating material.

20. The display apparatus of claim 15, further comprising:
a diffusion plate received in the receiving container and disposed on the lamps;
at least one optical sheet disposed on the diffusion plate; and
a middle mold combined with the receiving container to fix the diffusion plate and the optical sheet and to support the display panel.
